# EUROPEAN PATENT APPLICATION

(11) **EP 3 037 240 A1**
(43) Date of publication of application: **29.06.2016**
(21) Application number: 14200015.7
(22) Date of filing: 23.12.2014
(51) Int. Cl.: B29C 45/27, B29L 31/34, B29C 45/26

(54) **Injection mold for the production of a family of products**

(71) Applicant: ABB Technology AG, 8050 Zürich (CH)
(72) Inventor: Bednarowski, Dariusz, 31-952 Krakow (PL); Malinowski, Lukasz, 30-504 Krakow (PL)
(74) Representative: ABB Patent Attorneys

(57) **Abstract**

The invention is directed to an injection mold (1) for the production of injection molded products (30). The injection mold (1) comprises a first mold half (2) with a first insert (7) arranged in a first recess (9) of the first mold frame (5) and a second mold half (3) comprising a second insert (8) arranged in a second recess (10) of the second mold frame (6). The first and the second mold half (2, 3) interact with each other along a parting surface (4) forming a cavity (11) in between. The first mold frame (5) comprises a hot runner system with several nozzles (24) which interact with the cavity (11) via cold channels (15) which at least partially are arranged in the parting surface (4).

## Description

### FIELD OF THE INVENTION

The present invention relates to an injection mold, namely an injection mold for the production of a family of products having different sizes.

### BACKGROUND OF THE INVENTION

WO2013030386 was first published in March 2013 in the name of the same applicant. It describes a mold for injection molding of insulator discs. The therein described injection mold comprises a first mold half, a second mold half interacting with the first mold half along a parting surface and a cavity corresponding to an insulator to be produced. At least one injection nozzle is arranged at the first mold half suitable to discharge liquefied material into the cavity directly or indirectly.

WO07083286 was first published July 2007 in the name of Procter and Gamble Co. and is directed to a modular mold system comprising at least two mold designs or mold sizes. It is further directed to a modular mold system comprising molds that have the same design but vary in size and cavitation. In addition it is directed to a modular mold system for production of a family of a part designs. The modular mold system comprises multiple mold designs, multiple mold sizes, or both. The molds of the system are provided in groups having identical modular insert sizes. For each mold group the system comprises a common injection point in all molds of identical modular insert size. US3871611 was first published in March 1975 in the name of Taketa Phyllis. It describes an improved mold having removable and replaceable cores and cavities, so that the need of providing a new mold base for every new part or product is eliminated. One aim is to reduce the mold cost, since only the cores and cavities need to be replaced.

US5518389 was first published in April 1994 in the name of Kao Corp. It is directed to a multi-cavity mold, which has flow-distribution adjusting heaters provided for respective ones of main runners branching from a common channel so as to correspond to a plurality of cavities. The amount of resin charged into the cavities is made uniform from one cavity to the next by independently controlling the heaters. Sub-runners leading respective ones of the main runners are respectively provided with heaters for adjusting gate finish. One aim is to improve the gate finish and the moldability by independently controlling the heaters. The main runners hold enough resin for at least one shot, and pressure loss in the sub-runners is made equal to or greater than pressure loss in the main runners.

### SUMMARY OF THE INVENTION

Thermoplastics are widely used in many industries due to their numerous advantages. In many applications, they are replacing other materials like metals or thermoset materials thanks to their high strength, high stiffness and low weight. One of their biggest strengths is their ability of being processed with high speed and low cost manufacturing processes like injection molding or extrusion. Such processes allow manufacturing thermoplastic components with very high precision in high volumes and in a short time. Another big advantage of thermoplastic materials is their very good insulating properties what makes them perfect candidates for application in electrical products. They are commonly used in many products but predominantly within low voltage area. Recently, high-tech engineering thermoplastics with improved material properties are also considered for the application in higher voltage level products as a replacement of thermoset epoxy insulation. Mentioned improved properties together with the application of injection molding process, dedicated to the thin-walled parts, allow for a significant reduction of the product weight and thus much lower environmental impact. On the other hand, the injection molding process is especially suited for high production volumes (usually in tens of thousands or higher) and application for lower volumes like in case of medium and high voltage products may be economically unreasonable.

The cost of a production mold for producing a product may be significant, especially in case of parts with big dimensions and complex geometry. In case of mass production products, which are manufactured in hundreds of thousands or more, the cost of the mold split on the number of produced parts is usually low or even negligible. In case of lower production volumes, like in case of medium or high voltage products, the cost of the mold may significantly increase the final product cost and thus decrease potential economic benefits. Moreover, medium and high voltage products usually are done in various versions/sizes i.e. for various voltage levels what makes the situation even worse as they require high number of molds i.e. big investment. In some cases, the aspects mentioned above may stop the introduction of a new product. Therefore one aim of the invention is to overcome the draw-backs of the prior art in that an injection mold is equipped with replaceable cavities for injection molding of families of similar thermoplastic large products having an in principle symmetric design and which are different in size.

In the field of barrier insulators (insulators) for Gas Insulated Switchgears (GIS) the size (diameter) of insulators for High Voltage Gas Insulated Switchgears is the main factor that is changing with increasing rated voltage as higher voltage requires a longer insulating distance. The diameter of an insulator for 72kV is ca. 200mm while for 420kV it increases to 440mm. The herein disclosed invention is directed to an injection mold for the economic and cost effective production of such barrier insulators.

A mold according to the invention normally comprises a first mold half and a second mold half, which are arranged movable relative to each other in an axial direction such that the mold can be opened and closed during production. Each mold half comprises a stationary part (i.e. mold frame) which is reused for each application and an insert, which is arranged in a corresponding recess, and can easily be exchanged against another insert for the production of a different part of the same family of products. At least one of the mold halves (mold frame and/or recess) comprises a hot runner system or at least part thereof. At least one of the mold halves comprises (mold frame and/or recess) at least one cooling circuit and if appropriate an ejection system. Normally one of the mold halves comprises the hot runner system and the opposite mold halve comprises the ejector system. Each of the mold halves comprises a recess, which is suitable to receive an exchangeable insert, which is interconnected to the mold half by a standardized interface common to at least two inserts. The inserts each comprise a cavity, which corresponds to the insulator to be produced. The standardized interface between the insert and the corresponding mold frame ensures adequate interoperability. Beside channels to transfer liquefied, respectively molten material from the hot runner system to the cavity, the standardized interface comprises means to interconnect the at least one cooling channel. Furthermore, it comprises means to interconnect at least one individual ejector system to a common actuator. Alternatively or in addition the standardized interface may comprise at least one electrical connector to interconnect to transfer electrical energy to the related insert (e.g. for additional heating of the channels to transfer the material into the cavity). In a variation, the interconnection between the nozzles of the hot runner system and the cavity is realized by one or several cold channels with variable length depending on the insulator type. Depending on the field of application, the channels can be heated and/or cooled to a certain temperature to achieve best results.

According to the invention, an injection mold for the production of injection molded products (forming a family) normally comprises a first mold half comprising a first insert arranged in a first recess of a first mold frame and a second mold half comprising a second insert arranged in a second recess of a second mold frame. The inserts correspond with their corresponding mold frames by a standardized interface. The first and the second mold half interact with each other along a parting surface and forming a cavity in between suitable to receive liquefied (molten) material to mold a product. The first mold frame comprises a hot runner system with several nozzles, which interact with the cavity via cold channels (hereinafter also fourth channels) which preferably are at least partially arranged in the parting surface. In an embodiment, the cold channels are arranged at least partially in the first insert and/or the first mold frame forming part thereof. Alternatively or in addition, the cold channels are arranged at least partially in the second insert and/or the second mold frame forming part thereof. In a preferred variation, the cold channels are arranged in a radial direction with respect to the cavity respectively a center axis. The hot runner system normally comprises first channels which are heated to maintain the molten material at a certain temperature and which are arranged with respect to a flow direction of the liquefied plastic material before the nozzles. The first channels preferably extend in an axial direction. The nozzles are preferably evenly distributed around the cavity in a ring-like manner. If appropriate the nozzles can be arranged on more then one concentric ring around the center of the cavity. Good results can be achieved when the first channels are interconnected to a common supply channel (hereinafter also third channel) via second channels. The second channels are preferably arranged extending in a radial direction. The nozzles are preferably arranged in the parting surface or close behind. The cold channels preferably have a straight design. However, depending on the field of application, they can have a staggered shape. The nozzles of the hot runner system are normally of the open type. The nozzles of the hot runner system could also be actuated by a nozzle actuator. Depending on the size and the complexity of the product to be produced the nozzle actuator has a different design such that the nozzles can be activated individually or in groups.

In an embodiment the at least one of the inserts comprises an adapter with holding means suitable to temporarily receive and hold a conductor of a barrier insulator to be produced. If appropriate, e.g. to eject the final product or to compensate tolerances, the adapter can be arranged displaceable in axial direction.

One advantage of the herein disclosed injection mold is that the inserts are exchangeable. Thereby different inserts can be used in a common mold frame whereby economic production becomes available. A set of inserts is normally suitable to form a single cavity for a specific product. The single cavity is normally arranged in the center of the cavity in a balanced manner.

Such a common injection mold brings technical advantages over the molds known from the prior art. By arranging the nozzles on a larger diameter and guiding the melted material into the cavity by a channel in a radial direction it becomes possible to increase the number of the nozzles. An additional advantage is that the channel cross section can be increased. Furthermore, it is possible to implement an injection ring around the cavity and to inject the material into the cavity by at least one gate, which supports uniform filling of the cavity and thereby increases the processing performance.

E.g. in the case of a barrier insulator for 145kV Gas Insulated Switchgears molten thermoplastic material is injected to the cavity on the outer insulator diameter. In order to simplify the mold and to decrease amount of thermoplastic material per produced insulator a hot runner system (HRS) is preferably used. Other solutions e.g. based on cold runner system would normally require a more complicated three-plate mold with two partitioning planes and solidified material in the runner system would be wasted. One drawback is that hot runner systems are relatively complex systems, which are customized per each mold. Therefore, their cost is significant and might reach up to 25-50% of the complete mold cost.

### BRIEF DESCRIPTION OF THE DRAWINGS

The herein described invention will be fully understood from the detailed description given herein below and the accompanying drawings, which should not be considered limiting to the invention described in the appended claims. The drawings are showing in a simplified and schematic manner:
- Fig. 1: an injection mold in a perspective view and partially cut;
- Fig. 2: the injection mold according to Figure 1 in a closed manner in a side view;
- Fig. 3: a barrier disc having a first size;
- Fig. 4: a barrier disc having a second size;
- Fig. 5: a barrier disc having a third size.

### DESCRIPTION OF THE EMBODIMENTS

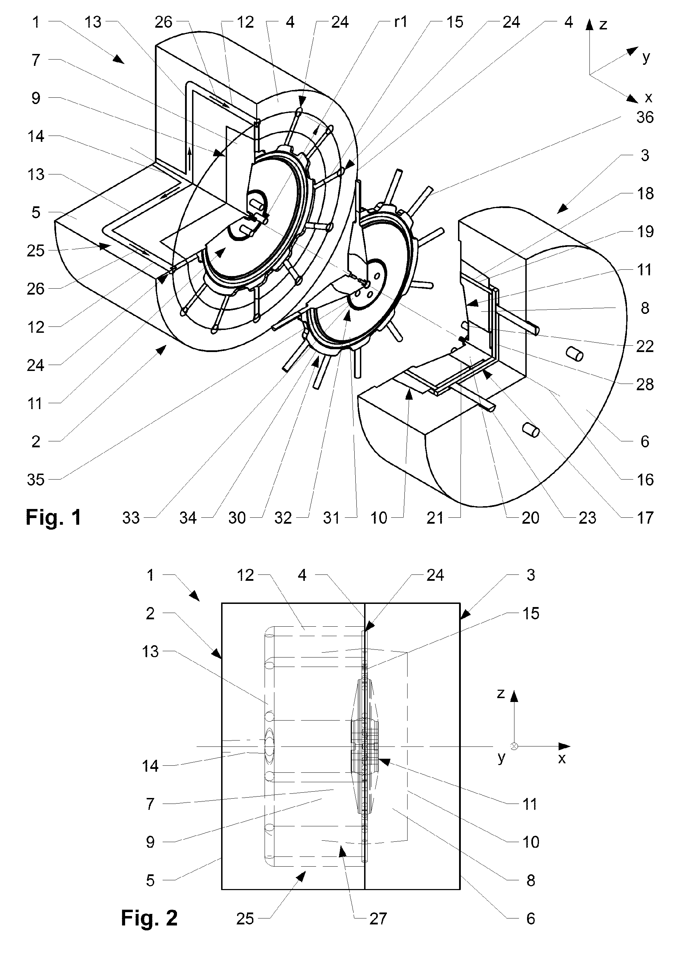

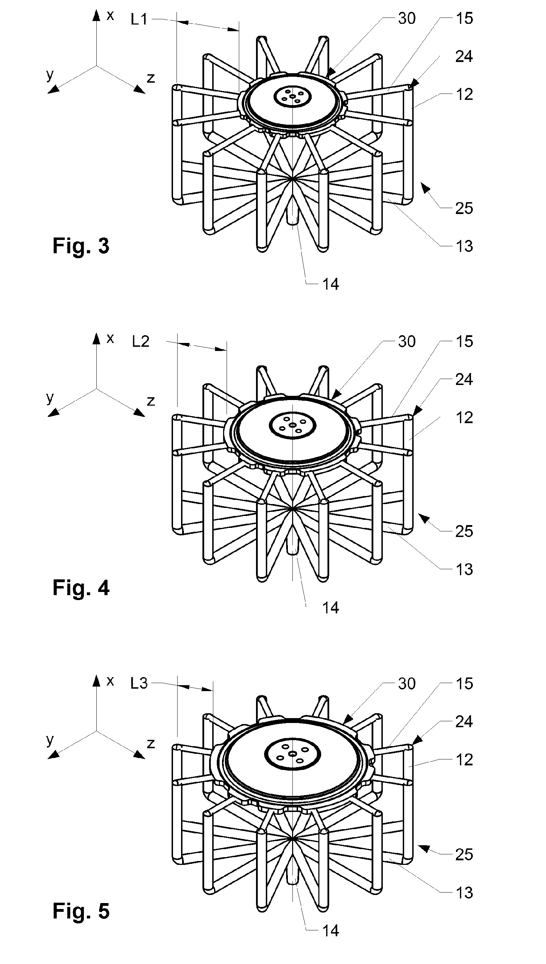

**Figure 1** shows an injection mold 1 according to the invention and a thereby producible product 30 in a perspective view and partially cut such the inside becomes apparent. **Figure 2** shows the injection mold 2 in a side view and with hidden lines visible. **Figure 3** to **Figure 5** are showing different products 30 made by the injection mold 1.

The injection mold 1 is partially cut such that the inside becomes apparent. The injection mold 1 and the product are shown in a simplified manner. However, the general principle of the invention can be understood based on the herein disclosed embodiment and the variations thereof.

The herein shown product is a barrier insulator 30 comprising an insulator disc 31 with a center opening 32 and an inner bead 33 and an outer bead 34. A conductor 35 is arranged in the center opening 32 of the insulator disc 31. It should be understood that the insulator disc 31 can have, depending on the field of application, other designs and shapes. Furthermore, the present invention is not limited to the production of barrier insulator 30 or parts thereof. Any other kind of disc like products single and multi-component can be produced herewith.

The shown example of the injection mold 1 comprises a first mold half 2 (gate side), a second mold half 3 (ejector side) interacting with the first mold half along a parting surface 4 which can be flat or staggered. The first mold half 2 comprises a first mold frame 5 in which a first exchangeable insert 7 (gate side) is arranged in a first recess 9. The second mold half 3 comprises a second mold frame 6 in which a second exchangeable insert 8 (ejector side) is arranged in a second recess 10. The first and the second insert 7, 8 are forming in a closed position of the injection mold 1 a cavity 11, which is a negative of the insulator 31 of the insulator disc 30. The inserts 7, 8 correspond with their related mold frames, respectively recesses 9, 10 via a standardized interface 27 arranged in the area between an insert and a thereto related recess 9, 10, respectively mold frame 5, 6.

In the shown variation the inserts 7, 8 have an in general axially symmetric design, which allows equal length of material flow as described herein after. The recesses 9, 10 have an in principle corresponding design.

As can be seen, first channels 12 for guiding liquefied plastic material to the cavity 11 (formed between the first and the second insert 7, 8) are arranged concentrically to a center axis 16 of the conductor 35 of the barrier insulator 30 to be produced. In the shown variation, they are arranged in a longitudinal direction. Depending on the field of application, the first channels 12 can have an alternative arrangement, e.g. having alternating variable distances with respect to the center axis 16. The first channels 12 are arranged evenly distributed in a circumferential direction around the center axis 16 and are interconnected via second channels 13, which extend in radial direction, to a common third channel 14 (supply channel) arranged concentric to the center axis 16. The first, the second and the third channels 12, 13, 14 are part of a hot runner system 25, which preferably comprises nozzles 24 and heating (not shown in detail) to maintain the molten plastic material at the appropriate temperature. The nozzles 24 are preferably arranged near an end of the first channels 12 in the parting surface 4 or close by and can preferably be operated in an individual manner such that material flow can be adjusted and evenly balanced. The flow of the material in the channels 12, 13, 14 of the hot runner system 25 is schematically indicated by arrows 26.

The cavity 11 is interconnected to the first channels 12 via fourth channels 15, which normally are not part of the hot runner system 25 and therefore are not heated. As can be seen in **Figure 1** the fourth channels 15 are at least partially arranged in the first mold frame 5 and the first insert 7. In the shown embodiment the fourth channels 15 are arranged in the parting surface 4 between the first and the second mold half extending in radial direction. The fourth channels are partially embedded in the second mold frame 6 and the second insert 8.

The second mold half 3 comprises an ejector mechanism 17. Ejector pins 18 are arranged in corresponding openings 19 of the second insert 8. The ejector pins 18 are arranged nearby the outer bead 34 of the insulator disc 31. Other arrangements are possible. Furthermore, an adapter 20 is visible which is arranged in the center of the cavity 11 and suitable to receive a conductor 35. The adapter 20 is arranged in a corresponding opening 21 of the second insert 8 forming part thereof. At least one of the insert comprises holding means 22 to temporarily hold the conductor 35 during the molding process. In the shown embodiment the adapter 20 is forming part of the ejector mechanism 17 and is foreseen to support ejection of the final product 30 from the cavity 11. The ejector pins 18 and the adapter 20 are displaceable in axial direction (x-direction) such that a final barrier insulator 30 can be ejected from the mold 1 after the molding process has been completed and the mold is opening. The ejection takes place by actuating the ejector pins 18 and the adapter 20 via an actuator 23, which acts via an actuator plate 28.

A process for making of a barrier insulator 30 can be summarized as follows: When the mold 1 is in an open position a conductor 35 is arranged on the adapter 20. In a subsequent step the mold 1 is closed forming the cavity 11. Then molten plastic material is injected via the fourth channels 15 into the cavity 11 by opening the nozzles 24 of the hot runner system 25 (both not shown in detail). The liquefied plastic material is guided through the heated first channels 12, second channels 13 and third channels 14 and then across the non-heated fourth channels 15 into the cavity 11 where it encompasses the conductor 35. After solidifying of the material the mold 1 is opened by relative movement of the first mold half 2 with respect to the second mold half 3 in axial direction (x). After sufficient opening of the mold 1 the ejector mechanism 17 is activated as described above and the barrier insulator 1 is ejected from the second mold half 3. It should be understood that in a similar manner insulator discs 31 can be produced which do not encompass a conductor in the mold 1 during the molding process. The insulator disc 31 and the conductor 35 can be assembled at a later stage.

In the shown embodiment, the barrier insulator 30 comprises sprues 36, which extend in radial direction from the outer bead 34 and which are removed at a later stage and after the molding process has been completed.

**Figures 3** to **5** show in a schematic manner products 30 having different sizes but belonging to the same family of products. The products 30 are shown along with the first, second and third channels 12, 13, 14 of the hot runner system 25, as well as the fourth channels 15 (cold channels) and the nozzles 24. As it can be seen the nozzles 24 and the channels 12, 13, 14 of the hot runner system are evenly distributed in a balanced manner around the product 30, respectively the cavity 11 suitable to forming it. Only the fourth channels 15 have different lengths L1-L3. The fourth channels 15 are partially arranged in at least one of the inserts 7, 8 (see **Figures 1** and **2**) and at least one of the mold frames 5, 6.

Rather, the words used in the specification are words of description rather than limitation, and it is understood that various changes may be made without departing from the spirit and scope of the invention.

**LIST OF DESIGNATIONS**

| | | | |
|---|---|---|---|
| r1 | Distance (nozzle - center axis) | 16 | Center axis |
| | | 17 | Ejector mechanism |
| L1-L 3 | Lengths of fourth channels | 18 | Ejector pin |
| 1 | Injection mold | 19 | Opening for ejector pin |
| 2 | First mold half (gate side) | 20 | Adapter (for conductor) |
| 3 | Second mold half (ejector side) | 21 | Opening of adapter |
| | | 22 | Holding means for adapter |
| 4 | Parting surface | 23 | Actuator |
| 5 | First mold frame (gate side) | 24 | Nozzle (hot runner system) |
| 6 | Second mold frame (ejector side) | 25 | Hot runner system |
| | | 26 | Flow direction of liquefied material (arrow) |
| 7 | First insert (gate side) | | |
| 8 | Second insert (ejector side) | 27 | Standardized interface |
| 9 | First recess (first mold half) | 28 | Actuator plate |
| 10 | Second recess (second mold half) | 30 | Barrier insulator (Product) |
| | | 31 | Insulator disc (Insulator) |
| 11 | Cavity | 32 | Center opening |
| 12 | First channels | 33 | Inner bead |
| 13 | Second channels | 34 | Outer bead |
| 14 | Third channel (supply channel) | 35 | Conductor |
| | | 36 | Sprue |
| 15 | Fourth channels (cold channels) | | |

## Claims

1. Injection mold (1) for the production of injection molded products (30) comprising:
a. a first mold half (2) comprising a first insert (7) arranged in a first recess (9) of a first mold frame (5);
b. a second mold half (3) comprising a second insert (8) arranged in a second recess (10) of a second mold frame (6); wherein
c. the first and the second mold half (2, 3) in a closed position of the injection mold (1) interact with each other along a parting surface (4) forming a cavity (11) in between;
d. the first mold frame (5) comprises a hot runner system (25) with several nozzles (24) which interact with the cavity (11) via fourth channels (15) at least partially arranged in the parting surface (4).

2. The injection mold (1) according to claim 1, **wherein** the fourth channels (15) are arranged at least partially in the first insert (7) and/or the first mold frame (5).

3. The injection mold (1) according to claim 1 or 2, **wherein** the fourth channels (15) are arranged at least partially in the second insert (8) and/or the second mold frame (6).

4. The injection mold (1) according to one of the previous claims, **wherein** the fourth channels (15) are arranged in a radial direction with respect to the cavity (11).

5. The injection mold (1) according to one of the previous claims, **wherein** the hot runner system (25) comprises first channels (12) which are arranged with respect to a flow direction (26) of the liquefied plastic material before the nozzles (24) and extend in an axial direction (x).

6. The injection mold (1) according to claim 5, **wherein** the first channels (12) are interconnected to a common supply channel (14) via second channels (13).

7. The injection mold (1) according to claim 6, **wherein** the second channels (13) extend in a radial direction.

8. The injection mold (1) according to one of the previous claims, **wherein** the nozzles (24) are arranged in the parting surface (4) or behind (x) the parting surface (4).

9. The injection mold (1) according to one of the previous claims, **wherein** the nozzles (24) are activated individually or in groups.

10. The injection mold (1) according to one of the previous claims, **wherein** at least one of the inserts (7, 8) comprises an adapter (20) with holding means to temporarily receive a conductor (35) of a barrier insulator (30).

11. The injection mold (1) according to claim 10, **wherein** the adapter (20) is arranged displaceable in axial direction (x).

12. The injection mold (1) according to claim 11, **wherein** the adapter (20) is forming part of an ejector mechanism (17).

13. The injection mold (1) according to one of the previous claims, **wherein** the inserts (7, 8) are having a circular cross section.

14. The injection mold (1) according to one of the previous claims, **wherein** the inserts (7, 8) are exchangeable with inserts (7, 8) comprising a different cavity (11).
